# EUROPÄISCHE PATENTSCHRIFT

(11) **EP 1 985 948 B1**
(45) Veröffentlichungstag und Bekanntmachung des Hinweises auf die Patenterteilung: **06.05.2015**
(21) Anmeldenummer: 08003948.0
(22) Anmeldetag: 04.03.2008
(51) Int. Cl.: F25B 30/04, F25B 17/08

(54) **Vakuum-Sorptionsvorrichtung und Verfahren zum Betrieb einer Vakuum-Sorptionsvorrichtung**
Vacuum sorption device and method for operating a vacuum sorption device
Dispositif de sorption sous vide et procédé de fonctionnement d'un dispositif de sorption sous vide

(30) Priorität: 27.04.2007 DE 102007020406
(43) Veröffentlichungstag der Anmeldung: 29.10.2008
(73) Patentinhaber: Viessmann Werke GmbH & Co. KG, 35107 Allendorf (DE)
(72) Erfinder: Stricker, Marc, Dr., 91126 Schwabach (DE); Dawoud, Belal, Dr., 35066 Frankenberg/Eder (DE)
(74) Vertreter: Wolf, Michael

(56) Entgegenhaltungen:
- EP-A- 0 202 662
- EP-A- 1 184 629
- DE-A1- 3 601 427
- DE-A1- 10 217 443
- DE-B3-102004 049 409
- DE-U1- 9 311 514

## Beschreibung

Die Erfindung betrifft eine Vakuum-Sorptionsvorrichtung gemäß dem Oberbegriff des Patentanspruchs 1 und ein Verfahren zum Betrieb einer Vakuum-Sorptionsvorrichtung gemäß dem Oberbegriff des Patentanspruchs 9.

Eine Vakuum-Sorptionsvorrichtung der eingangs genannten Art ist nach der DE 10 2004 049 409 B3 bekannt. Diese besteht aus einer Wärmequelle (zum Beispiel ein Gasbrenner) mit einem ersten wärmetauscher, einem aus einem Sorptionsmittel (zum Beispiel Zeolith) und einem zweiten Wärmetauscher bestehenden, periodisch ein Kältemittel (zum Beispiel Wasser) sorbierenden oder desorbierenden Sorber und einem mit einem Wärmeträgermedium (wiederum zum Beispiel Wasser) befüllten, die Wärmetauscher miteinander verbindenden, mindestens eine Verbindungsleitung umfassenden Sorberkreislauf, wobei die verbindungsleitung eine erste absperrbare, hydraulische Abzweigung (Dreiwegeventil [17] bzw. genauer, ein so genanntes 3/2-Wegeventil: solche Ventile haben drei Anschlüsse und zwei Ventilsitze; wechselseitig bleibt also immer ein ventilsitz geöffnet oder geschlossen) zu einer Vorlaufleitung eines Heizkreislaufs und eine zweite hydraulische Abzweigung zu einer Rücklaufleitung des Heizkreislaufs aufweist. Genauer betrachtet, umfasst der Sorberkreislauf eine vom ersten Wärmetauscher ausgangsseitig zum zweiten Wärmetauscher eingangsseitig führende Vorlaufleitung und eine vom zweiten Wärmetauscher ausgangsseitig zum ersten wärmetauscher eingangsseitig führende Rücklaufleitung. Der Sorberkreislauf weist ferner in der Regel auch eine Kreislaufpumpe auf. Typischerweise, wenn auch nicht zwingend, bildet die vorlaufleitung die oben genannte Verbindungsleitung.

Sorptionswärmepumpen, die mit einem Feststoffsorbent (wie zum Beispiel Zeolith) und einem Kältemittel (wie zum Beispiel Wasser) betrieben werden, müssen periodisch arbeiten. Im einfachsten Fall kommt nur ein Sorber zum Einsatz, der phasenabhängig als Desorber bzw. als Ad- bzw. Absorber fungiert. Dieser Sorber ist im einfachsten Fall mit einem (für die Desorptionsphase) Wärme gebenden Wärmeübertrager verbunden. Das Temperaturniveau in der Desorptionsphase ist abhängig vom gewählten Stoffsystem, beträgt allerdings für das erwähnte System (Zeolith-Wasser) mehr als 130°C. Kommt Wasser als Wärmeträgermedium in Betracht, so erfordern die Stoffdaten des Wassers einen Betrieb unter einem Druck, der den Dampfdruck bei gegebener Temperatur übersteigt, um Kavitation und Sieden sicher zu verhindern. Der zulässige Druck in Heizkreisläufen in häuslichen Anwendungen ist auf Grund zahlreicher vorschriften europaweit auf 3 bar beschränkt.

Üblicherweise kommt in Sorptionswärmepumpen auf Grund dieser Tatsache ein zusätzlicher, Druck überlagerter Kreislauf zum Einsatz in dem dann problemlos Temperaturen größer 100°C realisiert werden können. Dieser zusätzliche Kreislauf beinhaltet dann wiederum eine separate Pumpe, Ausdehnungsgefäß, Sicherheitsventil, Befüll- und Entlüftungsarmatur. Die Kopplung an den Heizkreislauf erfolgt in diesem Fall über einen separaten Wärmeübertrager zur Drucktrennung der beiden Kreisläufe.

Gemäß Figur 1 und der entsprechenden Beschreibung der DE 10 2004 049 409 B3 ist es aber auch bekannt, auf eine Trennung zwischen dem Sorberkreislauf (dort Wärmetragerkreislauf genannt) und dem Heizkreislauf zu verzichten. Bei dieser Lösung wird dabei aber technisch vorausgesetzt, dass der eigentliche Heizkreislauf dem vergleichsweise etwas höheren Druck des damit unmittelbar verbundenen Sorberkreislaufes standhält.

wie weitere Versuche ergeben haben, ist diese Voraussetzung aber nicht immer gegeben, und zwar insbesondere nicht bei älteren Heizkreisläufen, also zum Beispiel bei nachzurüstenden Anlagen.

Der Erfindung liegt demgemäß die Aufgabe zugrunde, eine Vakuum-Sorptionsvorrichtung der eingangs genannten Art und ein Verfahren zum Betrieb einer solchen Vakuum-Sorptionsvorrichtung zu schaffen, bei der/dem bei unmittelbarer Verbindung von Sorber- und Heizkreislauf dennoch keine für einen Heizkreislauf ungewöhnlich hohen Drücke auftreten, sprich, dieser trotz der unmittelbaren Verbindung zum Sorberkreislauf den sicherheitstechnischen Normen entsprechend betreibbar ist.

Diese Aufgabe ist mit einer Vakuum-Sorptionsvorrichtung der eingangs genannten Art gegenständlich durch die im Kennzeichen des Patentanspruchs 1 aufgeführten Merkmale gelöst. Verfahrensmäßig lösen die kennzeichnenden Merkmale des Patentanspruchs 9 diese Aufgabe.

Nach der Erfindung ist gegenständlich also vorgesehen, dass die erste hydraulische Abzweigung als Regelventil, vorzugsweise als ein auf Vorlauftemperatur regelbares Mischerventil, ausgebildet ist, dass die zweite hydraulische Abzweigung absperrbar und als regelbares Überströmventil ausgebildet ist und dass hydraulisch parallel zum Überströmventil eine mit einem in Richtung Sorberkreislauf durchströmbaren Durchgangsventil, vorzugsweise eine Rückschlagklappe, versehene Leitung vorgesehen ist. Verfahrensmäßig ist vorgesehen, dass die erste hydraulische Abzweigung und das Durchgangsventil während einer Desorptionsphase abgesperrt sind und dass das Überströmventil während der Desorptionsphase nur bei Überschreiten einer vorgegebenen Druckdifferenz zwischen Sorber- und Heizkreislauf in Richtung Heizkreislauf wärmeträgermediumsdurchlässig ist.

Mit anderen Worten ausgedrückt, dient die zweite hydraulische Abzweigung, die bisher nicht absperrbar war, während der Desorptionsphase zur Trennung der beiden Kreise, d. h. im Unterschied zur DE 10 2004 049 409 B3 wird der Heizkreislauf während der Desorptionsphase vom Sorberkreislauf vollständig abgekoppelt, um den Druckanstieg während der Desorptionsphase auf den Sorberkreislauf zu beschränken.

Die Desorptionsphase nochmals genauer betrachtend, gewährleistet dabei einerseits das Durchgangsventil (vorzugsweise Rückschlagventil), das ausschließlich in Richtung Sorberkreislauf durchströmbar ist, dass kein Wärmeträgermedium vom Sorberkreislauf in den Heizkreislauf strömen kann; andererseits ist das Überströmventil so ausgelegt, dass es jedenfalls bis zu einer vorgegebenen Druckdifferenz zwischen Sorber und Heizkreislauf undurchlässig ist. Sollte es allerdings während der Desorptionsphase im Sorberkreislauf zu einem Druck oberhalb eines vordefinierten Druckes kommen, so kann dieser Druck dank des Überströmventils abgebaut werden, und zwar dadurch, dass eine vergleichsweise geringe Menge an Wärmeträgermedium in den Heizkreislauf, der ein deutlich größeres Volumen als der Sorberkreislauf hat, abgelassen wird. Diese Sicherheitsfunktion führt im Heizkreislauf, der in üblicher Weise mit einem entsprechenden Druckausgleichs- bzw. Ausdehungsgefäß versehen ist, zu keinerlei Problemen, gewährleistet aber gleichzeitig, dass im Sorberkreislauf keine unzulässig hohen Drücke auftreten, wobei das Überströmventil natürlich sofort wieder schließt, sobald die vordefinierte Druckdifferenz zwischen Sorber- und Heizkreislauf wieder erreicht ist.

Da das Druckniveau während der Soptionsphase deutlich niedriger als in der Desorptionsphase ist, kann auf eine derartige Trennung während dieser Phase verzichtet, d. h. die energetisch günstige Verknüpfung der beiden Kreisläufe (ein entsprechender Wärmetauscher kann entfallen) wird erfindungsgemäß zumindest dann genutzt, wenn sie - mit Blick auf die einzuhaltenden Normen und Sicherheitsbestimmungen - für den Heizkreislauf nicht schädlich ist. Im übrigen kann erfindungsgemäß bei nachzurüstenden Altanlagen auf eine Sanierung bzw. auf einen Austausch des Heizkreislaufs verzichtet werden, da dieser trotz der direkten Verknüpfung mit dem Sorberkreislauf nicht stärker als vorher (druck-) belastet wird.

Um am heizkreisseitigen Ausgang der hydraulischen Abzweigung die Heizungsvorlauftemperatur in gewünschter weise einstellen zu können, ist diese Abzweigung schließlich erfindungsgemäß als Regelventil, insbesondere als so genanntes Mischerventil, ausgebildet. Der Heizkreis wird somit also nicht einfach mit der im Sorberkreislauf herrschenden Temperatur, sondern gezielt mit einer an ihn angepassten Temperatur beaufschlagt.

Andere vorteilhafte Weiterbildung ergeben sich aus den abhängigen Patentansprüchen.

Der Vollständigkeit halber wird noch auf die DE 102 17 443 B4 hingewiesen, bei der der Heizkreislauf aber über einen Wärmetauscher mit dem Sorberkreislauf verbunden ist.

Außerdem wird noch auf die EP 0 202 662 A1 hingewiesen, bei der - wie bei der DE 10 2004 049 409 B3 - lediglich so genannte Dreiwegeventile vorgesehen sind, denen also die oben erläuterte Regelfunktion fehlt. Weiterhin weist diese Lösung auch kein Überströmventil und kein Durchgangsventil auf, die aber den praktischen Betrieb der erfindungsgemäßen Vakuum-Sorptionsvorrichtung wesentlich verbessern, ganz abgesehen davon, dass die Lösung gemäß der schon über zwanzig Jahre alten EP 0 202 662 A1 absehbar ohnehin nicht sicher (im Hinblick auf den unkontrollierten Druckanstieg) bzw. nicht komfortabel (im Hinblick auf die ohne Regelventil heizkreisseitig nicht einstellbare Vorlauftemperatur) funktionieren dürfte.

Die erfindungsgemäße Vakuum-Sorptionsvorrichtung und das Verfahren zum Betrieb dieser Vakuum·Sorptionsvorrichtung einschließlich der erwähnten vorteilhaften Weiterbildungen gemäß der abhängigen Patentansprüche werden nachfolgend anhand der zeichnerischen Darstellung verschiedener Ausführungsbeispiele näher erläutert.

Es zeigt jeweils schematisch
- Figur 1: eine gemäß der DE 10 2004 049 409 B3 bekannte Vakuum-Sorptionsvorrichtung;
- Figur 2: eine sehr abstrahierte Grundausführungsform der erfindungsgemäßen Vakuum-Sorptionavorrichtung;
- Figur 3: eine bevorzugte Ausführungsform der erfindungsgemäßen Vakuum-Sorptionsvorrichtung;
- Figur 4: eine der Figur 2 ähnliche Ausführungsform mit einem Überströmventil und einem als Rückschlagklappe ausgebildeten Durchgangsventil; und
- Figur 5: eine der Figur 2 ähnliche Ausführungsform mit einem Überströmventil und einem motorbetägigbaren Durchgangsventil.

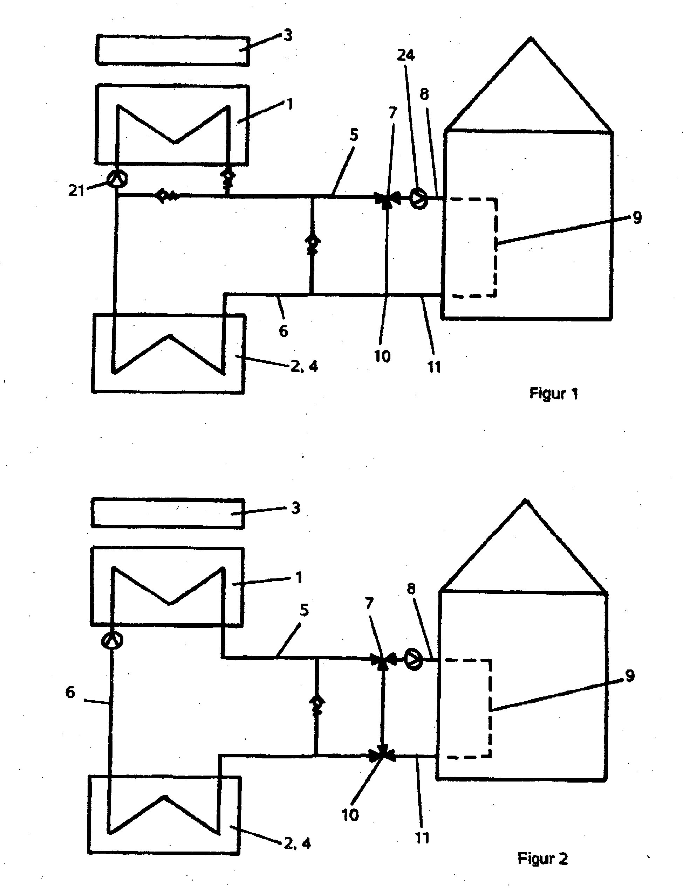

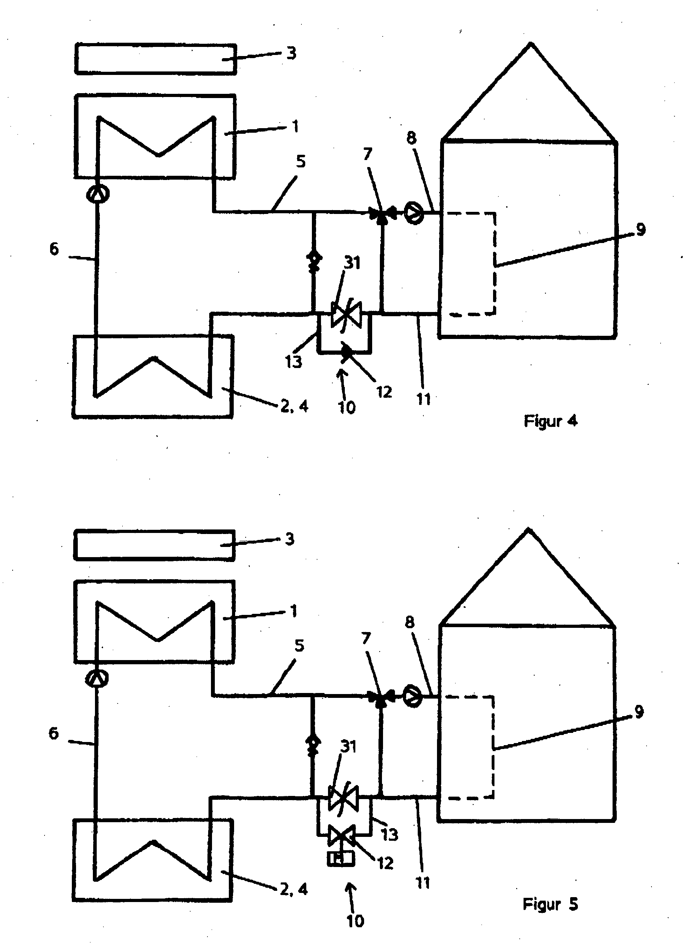

Die in den Figuren 1 bis 5 dargestellte Vakuum-Sorptionsvorrichtung besteht in allen Ausführungsformen aus einer Wärmequelle 3 (in der Regel ein Brenner, insbesondere Gasbrenner) mit einem ersten Wärmetauscher 1, einem aus einem Sorptionsmittel (insbesondere Zeolith) und einem zweiten Wärmetauscher 2 bestehenden, periodisch ein Kältemittel sorbierenden oder desorbierenden Sorber 4 und einem mit einem Wärmeträgermedium befüllten, die Wärmetauscher 1, 2 miteinander verbindenden, mindestens eine Verbindungsleitung 5 umfassenden Sorberkreislauf 6, wobei die Verbindungsleitung 5 eine erste absperrbare, hydraulische Abzweigung 7 zu einer Vorlaufleitung 8 eines Heizkreislaufs 9 und eine zweite hydraulische Abzweigung 10 zu einer Rücklaufleitung 11 des Hcizkreislaufs 9 aufweist.

Ferner ist bei allen Ausführungsformen vorteilhaft vorgesehen, dass der Sorberkreislauf 6 eine vom ersten Wärmetauscher 1 ausgangsseitig zum zweiten Wärmetauscher 2 eingangsseitig führende Vorlaufleitung 18 umfasst, wobei diese die verbindungsleitung 5 bildet. Ferner umfasst der Sorberkreislauf 6 eine vom zweiten Wärmetauscher 2 ausgangsseitig zum ersten Wärmetauscher 1 eingangsseitig führende Rücklaufleitung 19.

Wesentlich für die erfindungsgemäße Vakuum-Sorptionsvorrichtung ist nun, dass die erste hydraulische Abzweigung 7 als Regelventil ausgebildet ist, dass die zweite hydraulische Abzweigung 10 absperrbar und als regelbares Überströmventil 31 ausgebildet ist und dass hydraulisch parallel zum Überströmventil 31 eine mit einem in Richtung Sorberkreislauf 6 durchströmbaren Durchgangsventil 12 versehene Leitung 13 vorgesehen ist bzw. dass die erste hydraulische Abzweigung 7 und das Durchgangsventil 12 während einer Desorptionsphase des Sorbers 4 abgesperrt sind und dass das Überströmventil 31 während der Desorptionsphase nur bei Überschreiten einer vorgegebenen Druckdifferenz zwischen Sorber- 6 und Heizkreislauf 9 in Richtung Heizkreislauf 9 wärmeträgermediumsdurchlässig ist.

Der Vergleich von Figur 1 und 2 zeigt, dass die Erfindung gegenständlich insbesondere darin besteht, die erste und die zweite hydraulische Abzweigung 10 jeweils als Regelventil auszubilden.

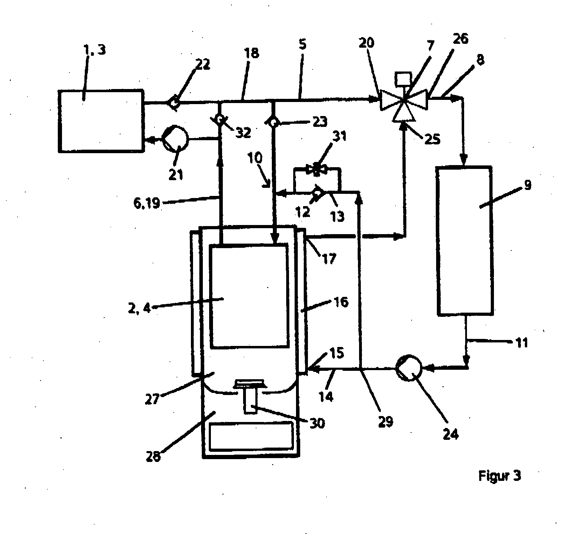

Mit Verweis auf Figur 3, die weiter unten noch genauer erläutert wird, ist dabei, wie erwähnt, vorgesehen, dass das Regelventil als Überströmventil ausgebildet ist, wobei hydraulisch parallel zum Regelventil bzw. Überströmventil eine mit einem Durchgangsventil bzw. einer Rückschlagklappe 12 versehene Leitung 13 vorgesehen ist.

Ferner ist gemäß Figur 3 vorgesehen, dass die Rücklaufleitung 11 des Heizkreislaufs 9 hydraulisch über eine Zusatzleitung 14 mit einem Eingang 15 eines am Sorber 4 angeordneten Kondensators 16 verbunden ist, wobei ein Ausgang 17 des Kondensators 16 hydraulisch mit der ersten hydraulischen Abzweigung 7 verbunden ist.

Zum besseren Verständnis wird nachfolgend die Funktionsweise der Vakuum-Sorptionsvorrichtung gemäß Figur 3 beschrieben (entsprechend abstrahiert ist diese Funktionsweise natürlich auch auf die "Basislösungen" gemäß Figur 2, 4 und 5 übertragbar) .

Dargestellt ist ein Brenner samt Wärmeübertrager (Wärmequelle 3 und Wärmetauscher 1), ein Sorber 4 sowie ein Kreislauf samt hydraulischer Führung. In der Desorptionsphase kann der dargestellte Teil der Hydraulik, die den Brenner mit dem Sorber 4 verbindet, mittels des dargestellten Regelventils (erste Abzweigung 7) vom restlichen Heizkreislauf 9 abgetrennt werden. Der Sorberkreislauf 6 darf über keinerlei Ausdehnungsgefäß verfügen. Die selbstständige Druckaufladung läuft folgendermaßen ab: Das Ventil 7 wird geschlossen (damit ist der Strömungspfad vom Eingang 20 zum Ausgang 26 geschlossen). Die Pumpe 21 und der Brenner werden gestartet. Durch die in das Medium eingebrachte Wärme in Verbindung mit der Volumenausdehnung durch den Temperaturanstieg steigt der Druck im Sorberkreislauf 6 sofort an. Hierdurch wird als nächster Schritt die Rückschlagklappe 12 dicht zugedrückt. Unter der Annahme, dass das, Wasser vollständig entgast ist, wird der Druck schnell ansteigen. Vorraussetzung hierfür ist allerdings, dass das Regelventil 7 hinreichend dicht schließt und ein Differenzdruck über das Ventil aufgebaut werden kann. Da der genannte Druck in (auch nur Teilen der Anlage) nicht zuverlässig beherrschbar ist, wird zusätzlich das Überströmventil 31 vorgesehen, welches eine Verbindung zwischen dem druckaufgeladenen Teil (Sorberkreislauf 6) und dem nicht druckaufgeladenen Teil (Heizkreislauf 9) herstellt. Dieses Überströmventil 31 öffnet bei einem eingestellten Differenzdruck und lässt das Wasser, welches über den eingestellten maximalen Druck hinaus eine zusätzliche Druckerhöhung bewirken würde, kontrolliert in den nicht druckaufgeladenen Heizkreislauf 9 ab. Auf diese Weise lässt sich während der Desorptionsphase im Teilkreislauf zwischen Brenner und Sorber durch das Überströmventil ein beliebiger Druck einstellen (zum Beispiel 5 bar). Hiermit kann dann ohne Probleme eine Temperatur größer der Siedetemperatur des Druckes im Heizkreislauf 9 realisiert werden. Wird nach Erreichen der maximalen Desorptionstemperatur der Brenner ausgeschaltet, die Pumpe 21 allerdings für eine gewisse Zeit (20s bis 60s) eingeschaltet gelassen, so erfolgt automatisch durch die Temperaturabnahme eine Druckabnahme, so dass es zum Zeitpunkt, an dem das Regelventil 7 wieder öffnet (Sorptionsphase), zu keinerlei Druckstößen kommt. Sollte der Druck derart schnell sinken, dass theoretisch im zuvor druckaufgeladenen Teil ein heizkreisbezüglicher Unterdruck entstehen würde, so kommt es über die Rückschlagklappe 12 bzw. über das motorbetägigbare, entsprechend druckgeregelte Durchgangsventil sofort zu einem Druckausgleich, so dass der angesprochene Zustand gar nicht erst entstehen kann.

Der einmodulare Sorptionswarmepumpenprozess wird, wie bereits angedeutet, in zwei Betriebsphasen realisiert, die in den folgenden Abschnitten näher beschrieben werden:
a) Desorptionsphase
   Der Eingang 20 des Regelventils (erste Abzweigung 7) wird geschlossen. Nach dem die Pumpe 21 des Sorberkreislaufs 6 eingeschaltet worden ist, kann der Brenner (Wärmequelle 3) in Betrieb genommen, wodurch die benötigte Desorptionswärme dem Sorber 4 zugeführt wird. Die Pumpe 21 saugt das Wärmeträgermedium (zum Beispiel Wasser) vom Sorber 4 ab und fördert dieses in den Wärmetauscher 1 des Brenners hinein. Von dort kommend durchströmt das Wärmeträgermedium der Reihe nach die Rückschlagklappen 22 und 23, bevor es anschließend in den Sorber 4 einströmt. Der Druck im Desorptionskreislauf steigt aufgrund der durch den Brenner verursachten Temperaturerhöhung.
   Der somit desorbierte Kältemitteldampf (zum Beispiel Wasserdampf) strömt aus dem Sorptionsmittel aus und wird an die Innenwand des Kondensators 16 kondensieren, der vom Heizungswasser (angetrieben durch die Heizkreispumpe 24) bei Heizungsrücklauftemperatur durchströmt wird.
   Die Auslegung des Kondensators 16 entspricht hierbei dem Stand der Technik gemäß der DE 36 25 247 A1. Das Heizungswasser erwärmt sich durch die Aufnahme der Kondensationswärme und durchströmt dann das Regelventil 7 über den heizkreisseitigen Eingang 25 zum heizkreisseitigen Ausgang 27 (Heizungsvorlauf) und von dort in den Heizkreislauf 9.
   Das Kältemittelkondensat läuft auf der Innenwand des Kondensators 16 herab und sammelt sich auf dem Trennboden, der den Kondensatorbauraum 27 vom Verdampferbauraum 28 trennt. Der Trennboden ist mit einer geeigneten Rückschlagklappe (siehe DE 10 2004 049 408 A1) versehen.
   Diese Phase dauert solange, bis die maximale Desorptionstemperatur (zum Beispiel 140°C) erreicht ist. Danach wird der Brenner ausgeschaltet, die Pumpe 21 bleibt dagegen eine gewisse Nachlaufzeit (bis zu 100 s) eingeschaltet, um das wärmeträgermedium durch die dann im Sorber 4 noch aufgewendete Desorptionswärme zu kühlen und somit den Druck im Desorptionskreislauf möglichst auf das Niveau des Heizungswasserdruckes zu reduzieren.
b) Sorptionsphase
   Nach dem Ablauf der sogenannten Desorptionsnachlaufzeit wird die Pumpe 21 ausgeschaltet. Zu diesem Zeitpunkt fördert die Pumpe 24 des Heizkreislaufs 9 das Heizungswasser in den Kondensator 16 hinein. Aus dem Kondensator 16 kommend durchströmt dieses das Regelventil (erste Abzweigung 7) vom Eingang 25 zum Ausgang 26. Das Regelventil öffnet den Eingang 20 teilweise, um somit einen Teil des heißen Heizungswassers im Desorptionskreislauf (Eingang 20) mit einem Teil des kalten Heizungswassers (Eingang 25) bei nahezu Heizungsrücklauftemperatur zu mischen und dadurch die gewünschte Heizungsvorlauftemperatur im Ausgang 26 einzustellen. Der Heizungswasserrücklauf teilt sich also an der Verteilerstelle 29 (Zugang zur Zusatzleitung 14) in zwei Teilströme auf. Der erste Teil strömt von der verteilerstelle 29 durch die Rückschlagklappe 12 in den Sorber 4 hinein. Dieser Teilstrom ist zu Beginn der Sorptionsphase klein und wird mit dem Fortlauf der Sorptionsphase auf Kosten des zweiten Teils immer größer (bezüglich der Funktion des aus u. a. zwei Rückschlagklappen 22, 32 und der Pumpe 21 gebildeten Bypasses wird auf die DE 10 2004 049 409 B3 verwiesen). Der zweite Teil des von der Pumpe 24 geförderten Heizungswassermassenstroms läuft über den Kondensator 16 in den Eingang 25 des Regelventils (erste Abzweigung 7), wird dann mit dem ersten Teil im Regelventil vermischt und kommt aus dem Ventil (Ausgang 26) mit der gewünschten vorlauftemperatur heraus. Mit dem Ablauf der Sorptionsphase wird der Sorber 4 allmählich kälter und ist somit in der Lage, einen Teil des vorher kondensierten und auf den Trennboden gesammelten Kältemittels aufzunehmen. Dadurch kühlt sich das Kältemittel ab und der Druck im Kondensatorraum 27 sinkt. Bei einem bestimmten Druck öffnet sich die Rückschlagklappe 30 und das Kältemittel fließt in den Verdampferraum 28 hinein. Ab diesem Moment verdampft das Kältemittel unter Aufnahme der Umgebungswärme im Verdampfer und wird im Sorber 4 adsorbiert. Dadurch wird die Sorptionswärme im Sorptionsmittel freigesetzt. Diese wird vom Heizungswasser, das den Sorber 4 durchströmt, aufgenommen und dem Heizkreislauf 9 zur Verfügung gestellt. Diese Arbeitsphase läuft solange bis eine gewisse vorgegebene Temperaturdifferenz über dem Sorber 4 (bis zu 5°C) unterschritten ist. Danach wird der Eingang 20 des Regelventils zugeschaltet und die Desorptionsphase beginnt vom neu.

### Bezugszeichenliste

- 1: erster Wärmetauscher
- 2: zweiter Wärmetauscher
- 3: Wärmequelle
- 4: Sorber
- 5: Verbindungsleitung
- 6: Sorberkreislauf
- 7: erste Abzweigung
- 8: Vorlaufleitung des Heizkreislaufs
- 9: Heizkreislauf
- 10: zweite Abzweigung
- 11: Rücklaufleitung des Heizkreislaufs
- 12: Durchgangsventil
- 13: Leitung
- 14: Zusatzleitung
- 15: Eingang des Kondensators
- 16: Kondensator
- 17: Ausgang des Kondensators
- 18: Vorlaufleitung vom Brenner
- 19: Rücklaufleitung zum Brenner
- 20: Eingang der ersten Abzweigung
- 21: Pumpe des Sorberkreislaufs
- 22: Rückschlagklappe
- 23: Rückschlagklappe
- 24: Heizkreispumpe
- 25: heizkreisseitiger Eingang der ersten Abzweigung
- 26: heizkreisseitiger Ausgang des ersten Abzweigung
- 27: Kondensatorbauraum
- 28: Verdampferbauraum
- 29: Verteilerstelle
- 30: Rückschlagklappe
- 31: Überströmventil
- 32: Rückschlagklappe

## Patentansprüche

1. Vakuum-Sorptionsvorrichtung, umfassend eine Wärmequelle (3) mit einem ersten Wärmetauscher (1), einen aus einem Sorptionemittel und einem zweiten wärmetauscher (2) bestehenden, periodisch ein Kältemittel sorbierenden oder desorbierenden Sorber (4) und einen mit einem Wärmeträgermedium befüllten, die Wärmetauscher (1, 2) miteinander verbindenden, mindestens eine Verbindungsleitung (5) umfassenden Sorberkreislauf (6), wobei die Verbindungsleitung (5) eine erste absperrbare, hydraulische Abzweigung (7) zu einer Vorlaufleitung (8) eines Heizkreislaufs (9) und eine zweite hydraulische Abzweigung (10) zu einer Rücklaufleitung (11) des Heizkreislaufs (9) aufweist,
**dadurch gekennzeichnet,**
**dass** die erste hydraulische Abzweigung (7) als Regelventil ausgebildet ist,
**dass** die zweite hydraulische Abzweigung (10) absperrbar und als regelbares Überströmventil (31) ausgebildet ist und
**dass** hydraulisch parallel zum Überströmventil (31) eine mit einem in Richtung Sorberkreislauf (6) durchströmbaren Durchgangsventil (12) versehene Leitung (13) vorgesehen ist.

2. Vakuum-Sorptionsvorrichtung nach Anspruch 1,
**dadurch gekennzeichnet,**
**dass** das Regelventil der ersten hydraulischen Abzweigung (7) als ein auf Vorlauftemperatur regelbares Mischerventil ausgebildet ist.

3. Vakuum-Sorptionsvorrichtung nach Anspruch 1 oder 2,
**dadurch gekennzeichnet,**
**dass** das Durchgangsventil (12) als Rückschlagklappe ausgebildet ist.

4. Vakuum-Sorptionsvorrichtung nach einem der Ansprüche 1 bis 3,
**dadurch gekennzeichnet,**
**dass** die Rücklaufleitung (11) des Heizkreislaufs (9) hydraulisch über eine Zusatzleitung (14) mit einem Eingang (15) eines am Sorber (4) angeordneten Kondensators (16) verbunden ist.

5. Vakuum-Sorptionsvorrichtung nach Anspruch 4,
**dadurch gekennzeichnet,**
**dass** ein Ausgang (17) des Kondensators (16) hydraulisch mit der ersten hydraulischen Abzweigung (7) verbunden ist.

6. Vakuum-Sorptionsvorrichtung nach einem der Ansprüche 1 bis 5,
**dadurch gekennzeichnet,**
**dass** der Sorberkreislauf (6) eine vom ersten Wärmetauscher (1) ausgangsseitig zum zweiten Wärmetauscher (2) eingangsseitig führende Vorlaufleitung (18) umfasst.

7. Vakuum-Sorptionsvorrichtung nach Anspruch 6,
**dadurch gekennzeichnet,**
**dass** die Vorlaufleitung (18) die Verbindungsleitung (5) bildet.

8. Vakuum- Sorptionsvorrichtung nach einem der Ansprüche 1 bis 7,
**dadurch gekennzeichnet,**
**dass** der Sorberkreislauf (6) eine vom zweiten Wärmetauscher (2)V ausgangsseitig zum ersten Wärmetauscher (1) eingangsseitig führende Rücklaufleitung (19) umfasst.

9. Verfahren zum Betrieb einer vakuum-Sorptionsvorrichtung gemäß dem Patentanspruch 1,
**dadurch gekennzeichnet,**
**dass** die erste hydraulische Abzweigung (7) und das Durchgangsventil (12) während einer Desorptionsphase des Sorbers (4) abgesperrt sind und
**dass** das Überströmventil (31) während der Desorptionsphase nur bei Überschreiten einer vorgegebenen Druckdifferenz zwischen Sorber- (6) und Heizkreislauf (9) in Richtung Heizkreislauf (9) wärmeträgermediumsdurchlässig ist.

## Claims

1. A vacuum sorption device, comprising a heat source (3) with a first heat exchanger (1), a sorber (4) that consists of a sorbent and a second heat exchanger (2) and periodically sorbs or desorbs a cooling medium, as well as a sorber circuit (6) that is filled with a heat transfer medium, connects the heat exchangers (1, 2) to one another and comprises at least one connecting pipe (5), wherein the connecting pipe (5) features a first hydraulic junction (7) that can be closed and leads to a flow pipe (8) of the heating circuit (9) and a second hydraulic junction (10) that leads to a return pipe (11) of the heating circuit (9),
**characterized in**
**that** the first hydraulic junction (7) is realized in the form of a control valve, in
**that** the second hydraulic junction (10) can be closed and is realized in the form of an adjustable overflow valve (31), and in
**that** a pipe (13) fitted with a through-valve (12) that opens in the direction of the sorber circuit (6) is provided hydraulically parallel to the overflow valve (31).

2. The vacuum sorption device according to Claim 1,
**characterized in**
**that** the control valve of the first hydraulic junction (7) is realized in the form of a mixing valve that can be adjusted to the flow temperature.

3. The vacuum sorption device according to Claim 1 or 2,
**characterized in**
**that** the through-valve (12) is realized in the form of a check valve.

4. The vacuum sorption device according to one of Claims 1 to 3,
**characterized in**
**that** the return pipe (11) of the heating circuit (9) is hydraulically connected to an inlet (15) of a condenser (16) arranged on the sorber (4) via an auxiliary pipe (14).

5. The vacuum sorption device according to Claim 4,
**characterized in**
**that** an outlet (17) of the condenser (16) is hydraulically connected to the first hydraulic junction (7).

6. The vacuum sorption device according to one of Claims 1 to 5,
**characterized in**
**that** the sorber circuit (6) comprises a flow pipe (18) that leads from the outlet side of the first heat exchanger (1) to the inlet side of the second heat exchanger (2).

7. The vacuum sorption device according to Claim 6,
**characterized in**
**that** the flow pipe (18) forms the connecting pipe (5).

8. The vacuum sorption device according to one of Claims 1 to 7,
**characterized in**
**that** the sorber circuit (6) comprises a return pipe (19) that leads from the outlet side of the second heat exchanger (2) to the inlet side of the first heat exchanger (1).

9. A method for operating a vacuum sorption device according to Claim 1,
**characterized in**
**that** the first hydraulic junction (7) and the through-valve (12) are closed during a desorption phase of the sorber (4), and in
**that** the heat transfer medium can during the desorption phase only flow through the overflow valve (31) in the direction of the heating circuit (9) if a predefined pressure differential between the sorber circuit (6) and the heating circuit (9) is exceeded.

## Revendications

1. Dispositif de sorption à vide, comprenant une source de chaleur (3) avec un premier échangeur de chaleur (1), un sorbant (4) composé d'un agent de sorption et d'un second échangeur de chaleur (2), sorbant ou désorbant périodiquement un réfrigérant, et un circuit de sorbant (6) rempli d'un fluide caloporteur, reliant les échangeurs de chaleur (1, 2) entre eux, comprenant au moins une conduite de liaison (5), sachant que la conduite de liaison (5) comprend une première dérivation hydraulique (7), pouvant être fermée, en direction d'une conduite d'entrée (8) d'un circuit de chauffage (9) et une seconde dérivation hydraulique (10) vers une conduite de retour (11) du circuit de chauffage (9),
**caractérisé en ce que**
la première dérivation hydraulique (7) est conçue en tant que soupape de régulation,
la seconde dérivation hydraulique (10) peut être fermée et est conçue en tant que soupape de trop-plein (31) régulable et,
une conduite (13) dotée d'une soupape à passage droit (12) pouvant être traversée en direction du circuit de sorbant (6) est prévue hydrauliquement parallèle à la soupape de trop-plein (31).

2. Dispositif de sorption à vide selon la revendication 1,
**caractérisé en ce que**
la soupape de régulation de la première dérivation hydraulique (7) est conçue en tant que robinet mélangeur réglable à température d'entrée.

3. Dispositif de sorption à vide selon la revendication 1 ou 2,
**caractérisé en ce que**
la soupape à passage droit (12) est conçue en tant que clapet anti-retour.

4. Dispositif de sorption à vide selon l'une des revendications 1 à 3,
**caractérisé en ce que**
la conduite de retour (11) du circuit de chauffage (9) est reliée hydrauliquement, par une conduite supplémentaire (14), à une entrée (15) d'un condensateur (16) disposé sur le sorbant (4).

5. Dispositif de sorption à vide selon la revendication 4,
**caractérisé en ce**
**qu'**une sortie (17) du condensateur (16) est reliée hydrauliquement à la première dérivation hydraulique (7).

6. Dispositif de sorption à vide selon l'une des revendications 1 à 5,
**caractérisé en ce que**
le circuit de sorbant (6) comprend une conduite d'entrée (18) allant de la sortie du premier échangeur de chaleur (1) vers l'entrée du second échangeur de chaleur (2).

7. Dispositif de sorption à vide selon la revendication 6,
**caractérisé en ce que**
la conduite d'entrée (18) forme la conduite de liaison (5).

8. Dispositif de sorption à vide selon l'une des revendications 1 à 7,
**caractérisé en ce que**
le circuit de sorbant (6) comprend une conduite de retour (19) allant de la sortie du second échangeur de chaleur (2) vers l'entrée du premier échangeur de chaleur (1).

9. Procédé destiné au fonctionnement d'un dispositif de sorption à vide selon la revendication 1,
**caractérisé en ce que**
la première dérivation hydraulique (7) et la soupape à passage droit (12) sont fermées pendant une phase de désorption du sorbant (4) et
que la soupape de trop-plein (31), pendant la phase de désorption, ne laisse passer le fluide caloporteur en direction du circuit de chauffage (9) que lorsqu'une différence de pression prédéfinie entre le circuit de sorbant (6) et le circuit de chauffage (9) est dépassée.
